# EUROPEAN PATENT APPLICATION

(11) **EP 4 583 209 A1**
(43) Date of publication of application: **09.07.2025**
(21) Application number: 22968857.7
(22) Date of filing: 20.12.2022
(51) Int. Cl.: H01M 4/62, H01M 4/66, H01M 10/0525

(54) **CURRENT COLLECTOR AND APPLICATION THEREOF, SECONDARY BATTERY, BATTERY MODULE, BATTERY PACK, AND ELECTRICAL APPARATUS**

(71) Applicant: Contemporary Amperex Technology (Hong Kong) Limited, Central (HK)
(72) Inventor: QIN, Meng, Ningde, Fujian 352100 (CN); WEN, Yan, Ningde, Fujian 352100 (CN); GUAN, Yingjie, Ningde, Fujian 352100 (CN); TAN, Xianming, Ningde, Fujian 352100 (CN); XU, Yue, Ningde, Fujian 352100 (CN); HUANG, Qisen, Ningde, Fujian 352100 (CN)
(74) Representative: Frick, Robert
(86) International application number: PCT/CN2022/140453
(87) International publication number: WO 2024/130555

(57) **Abstract**

This application provides a current collector, an application of the current collector, a secondary battery, a battery module, a battery pack, and an electrical device. An undercoat is formed on a surface of the current collector. The undercoat includes a carbon nanomaterial. The carbon nanomaterial includes at least two selected from a zero-dimensional carbon material, a one-dimensional carbon material, or a two-dimensional carbon material. The undercoat is conducive to reducing a nucleation overpotential in metal ion deposition, and can effectively induce uniform deposition of metal ions, regulate the metal ion deposition, effectively suppress dendrite growth of the metal ions, and improve cycle performance and safety of the battery.

## Description

### TECHNICAL FIELD

This application relates to the technical field of secondary batteries, and in particular, to a current collector, an application of the current collector, a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, and electric vehicles, military equipment, and aerospace.

As an indispensable part of a secondary battery, a current collector plays a key role in carrying active materials, providing a current channel, and connecting internal and external circuits. The current collector in the prior art is mainly made of a metal material, and is prone to nonuniform current densities in local regions, thereby giving rise to dendrites on the surface of the current collector, bringing about safety hazards, and failing to meet application requirements of a new-generation electrochemical system.

### SUMMARY

This application is made in view of the above subject matter, and an objective of this application is to provide a current collector with an undercoat formed on a surface. The current collector facilitates uniform deposition of metal ions on the surface of the current collector, and improves cycle performance and safety of a battery.

According to a first aspect of this application, a current collector with an undercoat formed on a surface is provided. The undercoat includes a carbon nanomaterial. The carbon nanomaterial includes at least two selected from a zero-dimensional carbon material, a one-dimensional carbon material, or a two-dimensional carbon material.

The carbon nanomaterials induce deposition of metal ions on the surface of the undercoat through adsorption. The nanoscale structure and arrangement of the carbon nanomaterials improve the uniformity of the distribution of nucleation sites, and are conducive to the uniform deposition of the metal ions. In addition, the zero-dimensional carbon material, the one-dimensional carbon material, and the two-dimensional carbon material, which are three types of carbon materials of different dimensions, are combined together to play a synergistic effect and form a "point-line-surface" network structure, thereby giving full play to the advantages of the three types of carbon materials, and achieving the effect of multilayered filling and connection. This further improves the uniformity of the distribution of the nucleation sites, reduces the nucleation over-potential in the metal ion deposition, effectively induces the uniform deposition of metal ions, regulates the metal ion deposition, and in turn, effectively suppresses the dendrite growth of metal ions. Moreover, the undercoat containing the carbon nanomaterials is also conducive to reducing a direct-current resistance of the battery that has been cycled for 100 cycles, improving the Coulombic efficiency of the battery, and improving the capacity retention rate of the battery that has been cycled for 100 cycles.

In any embodiment, the carbon nanomaterial in the undercoat includes the zero-dimensional carbon material and the one-dimensional carbon material.

The inventor hereof creatively discovers that the coupling of the zero-dimensional carbon material and the one-dimensional carbon material is more conducive to reducing an areal density of the undercoat and a nucleation overpotential of the metal ions, further inducing the metal ions to be uniformly deposited on the current collector, and significantly improving the capacity retention rate of the battery that has been cycled for 100 cycles.

In any embodiment, a median diameter D_{V50} of the zero-dimensional carbon material is 10 nm to 60 nm.

Controlling the median diameter D_{V50} of the zero-dimensional carbon material to be 10 nm to 60 nm can further improve the uniformity of arrangement of the carbon nanomaterials, reduce the nucleation overpotential of the metal ions and the direct-current resistance of the battery that has been cycled for 100 cycles, and improve the Coulombic efficiency of the battery and the capacity retention rate of the battery that has been cycled for 100 cycles.

In any embodiment, a length-to-diameter ratio of the one-dimensional carbon material is 500 to 50000, and optionally 1000 to 10000.

Controlling the length-to-diameter ratio of the one-dimensional carbon material to be 500 to 50000 effectively reduces the nucleation overpotential in metal ion deposition, suppresses the growth of dendrites, reduces the direct-current resistance of the battery that has been cycled for 100 cycles, and improves the Coulombic efficiency of the battery and the capacity retention rate of the battery that has been cycled for 100 cycles. Controlling the length-to-diameter ratio of the one-dimensional carbon material to be 1000 to 10000 can further improve the capacity retention rate of the battery that has been cycled for 100 cycles.

In any embodiment, a tube diameter of the one-dimensional carbon material is 1 nm to 20 nm, and optionally 5 nm to 20 nm. A length of the one-dimensional carbon material is 10 µm to 50 µm, and optionally 20 µm to 30 µm.

Controlling the tube diameter of the one-dimensional carbon material to be 1 nm to 20 nm and controlling the length of the one-dimensional carbon material to be 10 µm to 50 µm can effectively reduce the nucleation overpotential in metal ion deposition, suppress the growth of dendrites, reduce the direct-current resistance of the battery that has been cycled for 100 cycles, and improve the Coulombic efficiency of the battery and the capacity retention rate of the battery that has been cycled for 100 cycles. Controlling the tube diameter of the one-dimensional carbon material to be 5 nm to 20 nm can exert the advantages of the one-dimensional carbon material, further reduce the nucleation overpotential in the metal ion deposition and the direct-current resistance of the battery that has been cycled for 100 cycles, and improve the Coulombic efficiency of the battery and the capacity retention rate of the battery that has been cycled for 100 cycles. Controlling the length of the one-dimensional carbon material to be 20 µm to 30 µm can further reduce the direct-current resistance of the battery that has been cycled for 100 cycles.

In any embodiment, a median diameter D_{V50} of the two-dimensional carbon material is not greater than 500 nm.

Controlling the median diameter D_{V50} of the two-dimensional carbon material to be not greater than 500 nm can effectively reduce the nucleation overpotential of the metal ions, suppress the growth of dendrites, reduce the direct-current resistance of the battery that has been cycled for 100 cycles, and improve the Coulombic efficiency of the battery and the capacity retention rate of the battery that has been cycled for 100 cycles.

In any embodiment, a mass ratio between the two-dimensional carbon material, the one-dimensional carbon material, and the zero-dimensional carbon material is (0 to 10): (0 to 9): (0 to 9.5), where at least two of a mass of the two-dimensional carbon material, a mass of the one-dimensional carbon material, or a mass of the zero-dimensional carbon material are not zero concurrently.

Controlling the mass ratio between the two-dimensional carbon material, the one-dimensional carbon material, and the zero-dimensional carbon material to fall within an appropriate range can effectively reduce the nucleation overpotential of the metal ions, suppress the growth of dendrites, reduce the direct-current resistance of the battery that has been cycled for 100 cycles, and improve the Coulombic efficiency of the battery and the capacity retention rate of the battery that has been cycled for 100 cycles.

In any embodiment, a mass ratio between the one-dimensional carbon material and the zero-dimensional carbon material is (2: 8) to (7: 3).

Controlling the mass ratio between the one-dimensional carbon material and the zero-dimensional carbon material to fall within an appropriate range can more effectively reduce the nucleation overpotential of the metal ions and the direct-current resistance of the battery that has been cycled for 100 cycles, and improve the Coulombic efficiency of the battery and the capacity retention rate of the battery that has been cycled for 100 cycles.

In any embodiment, the zero-dimensional carbon material includes at least one selected from conductive carbon black, carbon nanodots, or fullerene; and the conductive carbon black includes at least one selected from Super P, Ketjen black, or acetylene black.

The zero-dimensional carbon material is of excellent electrical conductivity, and enables the undercoat to act as a conductive network for rapid transport of electrons. In addition, the nanoscale structure and arrangement of the zero-dimensional carbon material are conducive to reducing the current density, thereby reducing the overpotential in the metal ions deposition, promoting uniform deposition of the metal ions, and suppressing the growth of dendrites of the metal ions. In addition, the zero-dimensional carbon material is also conducive to reducing the direct-current resistance of the battery that has been cycled for 100 cycles, and improving the Coulombic efficiency of the battery and the capacity retention rate of the battery that has been cycled for 100 cycles.

In any embodiment, the one-dimensional carbon material includes at least one selected from carbon nanotubes, carbon nanohorns, carbon nanofibers, or carbon nanorods; and the carbon nanotubes include at least one selected from a single-walled carbon nanotube or a multi-walled carbon nanotube.

The one-dimensional carbon material is of excellent electrical conductivity, and enables the undercoat to act as a conductive network for rapid transport of electrons. In addition, the nanoscale structure and arrangement of the one-dimensional carbon material are conducive to reducing the current density, thereby reducing the overpotential in the metal ions deposition, promoting uniform deposition of the metal ions, and suppressing the growth of dendrites of the metal ions. In addition, the one-dimensional carbon material is also conducive to reducing the direct-current resistance of the battery that has been cycled for 100 cycles, and improving the Coulombic efficiency of the battery and the capacity retention rate of the battery that has been cycled for 100 cycles.

In any embodiment, the two-dimensional carbon material includes at least one selected from graphene or graphyne.

The two-dimensional carbon material is of excellent electrical conductivity, and enables the undercoat to act as a conductive network for rapid transport of electrons. In addition, the nanoscale structure and arrangement of the two-dimensional carbon material are conducive to reducing the current density, thereby reducing the overpotential in the metal ions deposition, promoting uniform deposition of the metal ions, and suppressing the growth of dendrites of the metal ions. In addition, the two-dimensional carbon material is also conducive to reducing the direct-current resistance of the battery that has been cycled for 100 cycles, and improving the Coulombic efficiency of the battery and the capacity retention rate of the battery that has been cycled for 100 cycles.

In any embodiment, the one-dimensional carbon material in the undercoat is a single-walled carbon nanotube, and the zero-dimensional carbon material in the undercoat is a conductive carbon black.

With the one-dimensional carbon material in the undercoat being a single-walled carbon nanotube and the zero-dimensional carbon material in the undercoat being conductive carbon black, this application further reduces the nucleation overpotential in the metal ion deposition, more effectively reduces the direct-current resistance of the battery that has been cycled for 100 cycles, and improves the Coulombic efficiency of the battery and the capacity retention rate of the battery that has been cycled for 100 cycles.

In any embodiment, a thickness of the undercoat is 0.5 µm to 15 µm, and optionally 1 µm to 8 µm.

By controlling the thickness of the undercoat to be 0.5 µm to 15 µm, this application provides enough nucleation sites, and is conducive to uniform deposition of the metal ions, effectively reduces the nucleation overpotential of the metal ions and the direct-current resistance of the battery that has been cycled for 100 cycles, improves the Coulombic efficiency of the battery and the capacity retention rate of the battery that has been cycled for 100 cycles, and at the same time, prevents the undercoat from affecting the energy density. Controlling the thickness of the undercoat to be 1 µm to 8 µm can further reduce the nucleation overpotential of the metal ions, and achieve a better trade-off between the nucleation sites and the energy density.

In any embodiment, an areal density of the undercoat is 0.5 mg/1540.25 mm² to 50 mg/1540.25 mm², and optionally 1 mg/1540.25 mm² to 25 mg/1540.25 mm².

Controlling the areal density of the undercoat to be 0.5 mg/1540.25 mm² to 50 mg/1540.25 mm² is conducive to uniform distribution of the nucleation sites and promotes uniform deposition of the metal ions without affecting the transport of electrons. Controlling the areal density of the undercoat to be 1 mg/1540.25 mm² to 25 mg/1540.25 mm² achieves a better trade-off between the nucleation sites and the electron transport.

In any embodiment, the undercoat further includes a binder. A mass ratio between the carbon nanomaterial and the binder in the undercoat is 1: (0.1 to 2), and optionally 1: (0.1 to 1).

Controlling the mass ratio between the carbon nanomaterial and the binder in the undercoat to be 1: (0.1 to 2) can effectively reduce the nucleation overpotential of the metal ions and the direct-current resistance of the battery that has been cycled for 100 cycles, and improve the Coulombic efficiency of the battery and the capacity retention rate of the battery that has been cycled for 100 cycles. Controlling the mass ratio between the carbon nanomaterial and the binder in the undercoat to be 1: (0.1 to 1) can further reduce the nucleation overpotential of the metal ions and the direct-current resistance of the battery that has been cycled for 100 cycles, and improve the Coulombic efficiency of the battery and the capacity retention rate of the battery that has been cycled for 100 cycles.

In any embodiment, the current collector includes at least one of metal foil, a metal foam current collector, a metal mesh current collector, a carbon felt current collector, a carbon cloth current collector, a carbon paper current collector, or a composite current collector.

The above current collectors are of high tensile strength and ductility, and are conducive to the stability and safety of the battery.

According to a second aspect of this application, an application of the current collector disclosed in any one of the above embodiments in a sodium battery is provided.

A third aspect of this application provides a secondary battery. The secondary battery includes a negative electrode plate. The negative electrode plate includes the current collector disclosed in any one of the above embodiments.

The secondary battery achieves superior cycle performance.

In any embodiment, the secondary battery includes at least one of a lithium battery, a sodium battery, a magnesium battery, a potassium battery, or a zinc battery.

In any embodiment, the secondary battery is an anode-free sodium battery. The anode-free sodium battery can possess a high energy density.

A fourth aspect of this application provides a battery module. The battery module includes the secondary battery according to the third aspect of this application.

A fifth aspect of this application provides a battery pack. The battery pack includes the secondary battery according to the third aspect of this application or the battery module according to the fourth aspect of this application.

A sixth aspect of this application provides an electrical device. The electrical device includes at least one of the secondary battery according to the third aspect of this application, the battery module according to the fourth aspect of this application, or the battery pack according to the fifth aspect of this application.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. cover plate.

### DETAILED DESCRIPTION OF EMBODIMENTS

The following describes and discloses in detail embodiments of a current collector, an application of the current collector, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Ametallic secondary battery is a secondary battery that uses a metal material (such as lithium, sodium, magnesium, potassium, or the like) as a negative electrode. The metal material on a negative current collector may be pre-deposited on a surface of the current collector as a negative active material, and may be deposited *in situ* on the surface of the current collector in a charge-and-discharge cycle. In other words, the metallic secondary batteries include a sodium battery, a lithium battery, a magnesium battery, a potassium battery, and so on, and include an anode-free battery. In an anode-free battery, a negative current collector also serves as a negative electrode plate, and the negative electrode plate contains no negative active material. In an initial charge-and-discharge cycle, metal ions are deposited *in situ* on the negative current collector.

Currently, there are many problems with the metallic batteries. Using an anode-free sodium battery as an example, in a charge-and-discharge cycle, sodium is deposited or precipitated nonuniformly on the surface of the current collector, thereby generating sodium dendrites. A part of the dendrites break off to cause "dead sodium or dead lithium", thereby reducing the energy density and cycle performance of the battery. Another part of the dendrites keep growing and eventually pierce the separator, thereby resulting in a short circuit of the battery and being prone to cause safety accidents.

### [Current collector]

In view of the above situation, this application discloses a current collector with an undercoat formed on a surface. The undercoat includes a carbon nanomaterial. The carbon nanomaterial includes at least two selected from a zero-dimensional carbon material, a one-dimensional carbon material, or a two-dimensional carbon material.

As used herein, the term "carbon nanomaterial" means a carbon material that is on the nanoscale (1 nm to 100 nm) in at least one dimension in a three-dimensional space or a carbon material that uses said carbon material as a basic unit and that is almost equivalently on a scale of 10 to 1000 atoms arranged closely together.

As used herein, the term "zero-dimensional carbon material" means a carbon material that is on a scale of less than or equal to 100 nm in all three dimensions. As an example, the zero-dimensional carbon materials include, but are not limited to, one or more of Super P, Ketjen black, acetylene black, carbon nanodots, or fullerene.

As used herein, the term "one-dimensional carbon material" means a carbon material that is on a scale of less than or equal to 100 nm in all two dimensions. The one-dimensional carbon material may be regarded as a line. As examples, the one-dimensional carbon materials include, but are not limited to, one or more of carbon nanotubes, carbon nanohorns, carbon nanofibers, or carbon nanorods.

As used herein, the term "two-dimensional carbon material" means a carbon material that is on a scale of less than or equal to 100 nm in one dimension. The two-dimensional carbon material may be regarded as a plane. As examples, the two-dimensional carbon materials include, but are not limited to, graphene and/or graphyne.

As used herein, the term "Super P" means a grape-like carbon black formed by aggregating particles.

As used herein, the term "Ketjen black" means branched carbon black.

As used herein, the term "acetylene black" means a chain-like carbon black formed by aggregating particles.

As used herein, the term "carbon nanodots" means a zero-dimensional carbon nanomaterial formed by quasi-spherical carbon particles.

As used herein, the term "fullerene" means a hollow molecule formed of carbon and assuming a unique zero-dimensional structure.

In some embodiments, the undercoat includes a zero-dimensional carbon material and a one-dimensional carbon material. In some embodiments, the undercoat includes a zero-dimensional carbon material and a two-dimensional carbon material. In some embodiments, the undercoat includes a one-dimensional carbon material and a two-dimensional carbon material. In some embodiments, the undercoat includes a zero-dimensional carbon material, a one-dimensional carbon material, and a two-dimensional carbon material.

The carbon nanomaterials induce deposition of metal ions on the surface of the undercoat through adsorption. The nanoscale structure and arrangement of the carbon nanomaterials improve the uniformity of the distribution of nucleation sites, and are conducive to the uniform deposition of the metal ions. In addition, the zero-dimensional carbon material, the one-dimensional carbon material, and the two-dimensional carbon material, which are three types of carbon materials of different dimensions, are combined together to play a synergistic effect and form a "point-line-surface" network structure. The zero-dimensional carbon material may fill a gap, the one-dimensional carbon material may play the role of bridging by virtue of a length advantage, and the two-dimensional carbon material may play a role in improving the coverage rate of the current collector by virtue of a large specific surface area, thereby further improving the dispersion uniformity of the carbon nanomaterials, alleviating the excessive difference in current density between local regions, and reducing the degree of direct contact between the current collector and the metal ions to be deposited. The three types of carbon nanomaterials of different dimensions fully exert their respective advantages to achieve the effect of multilayered filling and connection, thereby further improving the uniformity of the distribution of the nucleation sites, reducing the nucleation over-potential in the metal ion deposition, effectively inducing the uniform deposition of metal ions, regulating the metal ion deposition, and in turn, effectively suppressing the dendrite growth of metal ions. Moreover, the undercoat containing the carbon nanomaterials is also conducive to reducing a direct-current resistance of the battery that has been cycled for 100 cycles, improving the Coulombic efficiency of the battery, and improving the capacity retention rate of the battery that has been cycled for 100 cycles.

As used herein, the term "nucleation site" means a location at which a metal atom is deposited after being formed by electrons gained by the metal ions from a negative electrode.

As used herein, the term "nucleation overpotential" means a potential required for depositing a metal atom formed by electrons gained by the metal ions from the negative electrode.

As used herein, the term "dendrite" means non-ideal growth of metallic phase in a local region caused by nonuniform deposition of metal ions.

As used herein, the nucleation overpotential is primarily used for representing the potential required for depositing the metal ions, and can reflect the uniformity of the deposition of the metal ions, and may be tested by any well-known method.

As used herein, the Coulombic efficiency means the initial Coulombic efficiency, and is used for represent a ratio of a discharge capacity to a charge capacity of a battery during a first cycle, and can reflect the degree of depletion of the metal ions, and may be tested by any well-known method.

As used herein, the direct-current resistance of a battery that has been cycled for 100 cycles is used for representing an internal resistance of the battery that has been cycled for 100 cycles, and can reflect the electronic conductivity of the battery, and may be tested by any well-known method.

As used herein, the capacity retention rate of a battery that has been cycled for 100 cycles is used for representing the cycling performance of the battery, and can reflect the cycle performance of the battery, and may be tested by any well-known method.

In some embodiments, the carbon nanomaterial in the undercoat includes a zero-dimensional carbon material and a one-dimensional carbon material.

In some embodiments, the carbon nanomaterial in the undercoat includes only a zero-dimensional carbon material and a one-dimensional carbon material.

It is generally recognized in the prior art that the point-like zero-dimensional carbon material and the linear one-dimensional carbon material cannot implement uniform coverage on the surface of the current collector unless the thickness of the material is higher than that of the two-dimensional carbon material or the areal density is higher than that of the two-dimensional carbon material. The uniform coverage helps to implement uniform deposition of the metal ions in the electrolyte solution.

Although the mechanism remains unclear, the applicant hereof unexpectedly finds that, unlike what is generally known in the prior art, the undercoat containing only the zero-dimensional carbon material and the one-dimensional carbon material can further reduce the nucleation overpotential of metal ions while reducing the areal density of the undercoat, help to induce uniform deposition of the metal ions on the current collector, and significantly improve the capacity retention rate of the battery that has been cycled for 100 cycles.

In some embodiments, a median diameter D_{V50} of the zero-dimensional carbon material is 10 nm to 60 nm. In some embodiments, the median diameter D_{V50} of the zero-dimensional carbon material is optionally 1 nm, 3 nm, 5 nm, 7 nm, 10 nm, 15 nm, 20 nm, 25 nm, 30 nm, 35 nm, 40 nm, 45 nm, 50 nm, 55 nm, or 60 nm.

As used herein, the term "median diameter" is a particle diameter corresponding to a point at which the cumulative particle size distribution percentage of the sample reaches 50% in a particle size distribution curve of the sample. The physical meaning of the median diameter is a particle diameter value than which 50% of the sample particles are larger and 50% of the sample particles are smaller in diameter.

Controlling the median diameter D_{V50} of the zero-dimensional carbon material to be 10 nm to 60 nm can further improve the uniformity of arrangement of the carbon nanomaterials, reduce the nucleation overpotential of the metal ions and the direct-current resistance of the battery that has been cycled for 100 cycles, and improve the Coulombic efficiency of the battery and the capacity retention rate of the battery that has been cycled for 100 cycles.

In some embodiments, a length-to-diameter ratio of the one-dimensional carbon material is 500 to 50000, and optionally 1000 to 10000. In some embodiments, the length-to-diameter ratio of the one-dimensional carbon material is optionally 500, 600, 700, 800, 900, 1000, 2000, 3000, 4000, 5000, 6000, 7000, 8000, 9000, 10000, 15000, 20000, 25000, 30000, 35000, 40000, 45000, or 50000.

As used herein, the term "length-to-diameter ratio" means a ratio of the length to the tube diameter of the one-dimensional carbon material.

Controlling the length-to-diameter ratio of the one-dimensional carbon material to be 500 to 50000 effectively reduces the nucleation overpotential of the metal ions, suppresses the growth of dendrites, reduces the direct-current resistance of the battery that has been cycled for 100 cycles, and improves the Coulombic efficiency of the battery and the capacity retention rate of the battery that has been cycled for 100 cycles. Controlling the length-to-diameter ratio of the one-dimensional carbon material to be 1000 to 10000 can further improve the capacity retention rate of the battery that has been cycled for 100 cycles.

In some embodiments, the tube diameter of the one-dimensional carbon material is 1 nm to 20 nm, and optionally 5 nm to 20 nm; and the length of the one-dimensional carbon material is 10 µm to 50 µm, and optionally 20 µm to 30 µm. In some embodiments, the tube diameter of the one-dimensional carbon material is optionally 1 nm, 2 nm, 4 nm, 5 nm, 6 nm, 8 nm, 10 nm, 12 nm, 14 nm, 15 nm, 16 nm, 18 nm, or 20 nm. In some embodiments, the length of the one-dimensional carbon material is optionally 10 µm, 12 µm, 15 µm, 17 µm, 20 µm, 23 µm, 25 µm, 28 µm, 30 µm, 33 µm, 35 µm, 37 µm, 40 µm, 42 µm, 45 µm, 48 µm, or 50 µm.

Controlling the tube diameter of the one-dimensional carbon material to be 1 nm to 20 nm and controlling the length of the one-dimensional carbon material to be 10 µm to 50 µm can improve the uniformity of the arrangement of the carbon nanomaterial, effectively reduce the nucleation overpotential of the metal ions, suppress the growth of dendrites, reduce the direct-current resistance of the battery that has been cycled for 100 cycles, and improve the Coulombic efficiency of the battery and the capacity retention rate of the battery that has been cycled for 100 cycles. Controlling the tube diameter of the one-dimensional carbon material to be 5 nm to 20 nm can exert the advantages of the one-dimensional carbon material, further reduce the nucleation overpotential of sodium ions and the direct-current resistance of the battery that has been cycled for 100 cycles, and improve the Coulombic efficiency of the battery and the capacity retention rate of the battery that has been cycled for 100 cycles. Controlling the length of the one-dimensional carbon material to be 20 µm to 30 µm can further reduce the direct-current resistance of the battery that has been cycled for 100 cycles.

In some embodiments, the median diameter D_{V50} of the two-dimensional carbon material is not greater than 500 nm. In some embodiments, the median diameter D_{V50} of the two-dimensional carbon material is optionally 1 nm, 3 nm, 5 nm, 7 nm, 10 nm, 20 nm, 30 nm, 40 nm, 50 nm, 60 nm, 70 nm, 80 nm, 90 nm, 100 nm, 150 nm, 200 nm, 250 nm, 300 nm, 350 nm, 400 m, 450 nm, or 500 nm.

Controlling the median diameter D_{V50} of the two-dimensional carbon material to be not greater than 500 nm can effectively reduce the nucleation overpotential of the metal ions, suppress the growth of dendrites, reduce the direct-current resistance of the battery that has been cycled for 100 cycles, and improve the Coulombic efficiency of the battery and the capacity retention rate of the battery that has been cycled for 100 cycles.

In some embodiments, a mass ratio between the two-dimensional carbon material, the one-dimensional carbon material, and the zero-dimensional carbon material is (0 to 10): (0 to 9): (0 to 9.5), where at least two of a mass of the two-dimensional carbon material, a mass of the one-dimensional carbon material, or a mass of the zero-dimensional carbon material are not zero concurrently. In some embodiments, the mass ratio between the two-dimensional carbon material, the one-dimensional carbon material, and the zero-dimensional carbon material is optionally 8: 0: 2, 8: 2: 0, 0: 2: 8, 1: 2: 8, 2: 2: 8, 3: 2: 8, 5: 2: 8, 7: 2: 8, 9: 2: 8, 10: 2: 8, 3: 9: 8, 3: 2: 9.5, or 10: 9: 9.5.

Controlling the mass ratio between the two-dimensional carbon material, the one-dimensional carbon material, and the zero-dimensional carbon material to fall within an appropriate range can reduce the overpotential in the metal ion deposition, suppress the growth of dendrites of the metal ions, reduce the direct-current resistance of the battery that has been cycled for 100 cycles, and improve the Coulombic efficiency of the battery and the capacity retention rate of the battery that has been cycled for 100 cycles.

In some embodiments, a mass ratio between the one-dimensional carbon material and the zero-dimensional carbon material is (2: 8) to (7: 3). In some embodiments, the mass ratio between the one-dimensional carbon material and the zero-dimensional carbon material is optionally 2: 8, 2.5: 7.5, 3: 7, 3.5: 6.5, 4: 6, 4.5: 5.5, 5: 5, 5.5: 4.5, 6: 4, 6.5: 3.5, or 7: 3.

Controlling the mass ratio between the one-dimensional carbon material and the zero-dimensional carbon material to fall within an appropriate range can more effectively reduce the nucleation overpotential of the metal ions and the direct-current resistance of the battery that has been cycled for 100 cycles, and improve the Coulombic efficiency of the battery and the capacity retention rate of the battery that has been cycled for 100 cycles.

In some embodiments, the zero-dimensional carbon material includes at least one selected from conductive carbon black, carbon nanodots, or fullerene; and the conductive carbon black includes at least one selected from Super P, Ketjen black, or acetylene black.

In some embodiments, the one-dimensional carbon material includes at least one selected from carbon nanotubes, carbon nanohorns, carbon nanofibers, or carbon nanorods; and the carbon nanotubes include at least one selected from a single-walled carbon nanotube or a multi-walled carbon nanotube.

In some embodiments, the two-dimensional carbon material includes at least one selected from graphene or graphyne.

As used herein, the term "single-walled carbon nanotube" means a seamless hollow cylinder formed by rolling up monolayer graphene, with a tube diameter less than 100 nm and a tube length greater than 100 nm.

As used herein, the term "multi-walled carbon nanotube" means a cylinder formed by arranging a plurality of single-walled carbon nanotubes concentrically, with a tube diameter less than 100 nm and a tube length greater than 100 nm.

As used herein, the term "monolayer graphene" is a single-layer sheet structure formed by closely arranging carbon atoms periodically in a hexagonal honeycomb pattern. As an example, the thickness of the monolayer graphene is just 0.3 nm to 0.4 nm.

In some embodiments, the zero-dimensional carbon material includes Ketjen black. In some embodiments, the zero-dimensional carbon material includes Super P.
In some embodiments, the zero-dimensional carbon material includes Super P and fullerene. In some embodiments, the zero-dimensional carbon material includes Super P and Ketjen black. In some embodiments, the zero-dimensional carbon material includes carbon nanodots, Ketjen black, and acetylene black.

In some embodiments, the one-dimensional carbon material includes single-walled carbon nanotubes. In some embodiments, the one-dimensional carbon material includes multi-walled carbon nanotubes. In some embodiments, the one-dimensional carbon material includes single-walled carbon nanotubes and carbon nanofibers. In some embodiments, the one-dimensional carbon material includes single-walled carbon nanotubes and multi-walled carbon nanotubes.

In some embodiments, the one-dimensional carbon material may also include few-walled carbon nanotubes.

In some embodiments, the graphene includes one of monolayer graphene or multilayer graphene.

As used herein, the term "few-walled carbon nanotube" means a mixture of single-walled carbon nanotubes, double-walled carbon nanotubes, and triple-walled carbon nanotubes.

As used herein, the term "multilayer graphene" is prepared by stacking 2 to 10 layers of monolayer graphene, with a total thickness of less than 100 nm.

The zero-dimensional carbon material, the one-dimensional carbon material, and the two-dimensional carbon material are of excellent electrical conductivity, and enable the undercoat to act as a conductive network for rapid transport of electrons. In addition, the nanoscale structure and arrangement of the carbon materials are conducive to reducing the current density, thereby reducing the overpotential in the metal ions deposition, promoting uniform deposition of the metal ions, and suppressing the growth of dendrites of the metal ions. In addition, the zero-dimensional carbon material, the one-dimensional carbon material, and two-dimensional carbon material are also conducive to reducing the direct-current resistance of the battery that has been cycled for 100 cycles, and improving the Coulombic efficiency of the battery and the capacity retention rate of the battery that has been cycled for 100 cycles.

In some embodiments, the one-dimensional carbon material in the undercoat is a single-walled carbon nanotube, and the zero-dimensional carbon material in the undercoat is a conductive carbon black. In some embodiments, the zero-dimensional carbon material in the undercoat is optionally Super P; the zero-dimensional carbon material in the undercoat is optionally Ketjen black; or, the zero-dimensional carbon material in the undercoat is optionally Super P, Ketjen black, and acetylene black.

With the single-walled carbon nanotube coupled with the conductive carbon black, this application further reduces the overpotential in the metal ion deposition, more effectively reduces the direct-current resistance of the battery that has been cycled for 100 cycles, and improves the Coulombic efficiency of the battery and the capacity retention rate of the battery that has been cycled for 100 cycles.

In some embodiments, the thickness of the undercoat is 0.5 µm to 15 µm, and optionally 1 µm to 8 µm. In some embodiments, the thickness of the undercoat is optionally 0.5 µm, 1 µm, 2 µm, 3 µm, 4 µm, 5 µm, 6 µm, 7 µm, 8 µm, 9 µm, 10 µm, 11 µm, 12 µm, 13 µm, 14 µm, or 15 µm.

The undercoat on the surface of the negative current collector is relatively small in thickness, and is unable to play the role of the negative active material. That is, the negative electrode plate contains no negative active material. During initial charging, metal is deposited on the surface of the negative current collector so that the deposited metal can be attached to the undercoat on the surface of the negative current collector. By controlling the thickness of the undercoat to be 0.5 µm to 15 µm, this application provides enough nucleation sites, and is conducive to uniform deposition of the metal ions, effectively reduces the nucleation overpotential of the metal ions and the direct-current resistance of the battery that has been cycled for 100 cycles, improves the Coulombic efficiency of the battery and the capacity retention rate of the battery that has been cycled for 100 cycles, and at the same time, prevents the undercoat from affecting the energy density. Controlling the thickness of the undercoat to be 1 µm to 8 µm can further reduce the nucleation overpotential of the metal ions, and achieve a better trade-off between the nucleation sites and the energy density.

In some embodiments, the areal density of the undercoat is 0.5 mg/1540.25 mm² to 50 mg/1540.25 mm², and optionally 1 mg/1540.25 mm² to 25 mg/1540.25 mm². In some embodiments, the areal density of the undercoat is optionally 0.5 mg/1540.25 mm², 1 mg/1540.25 mm², 2 mg/1540.25 mm², 5 mg/1540.25 mm², 7 mg/1540.25 mm², 10 mg/1540.25 mm², 15 mg/1540.25 mm², 20 mg/1540.25 mm², 25 mg/1540.25 mm², 30 mg/ 1540.25 mm², 35 mg/1540.25 mm², 40 mg/1540.25 mm², 45 mg/1540.25 mm², or 50 mg/1540.25 mm².

As used herein, the term "areal density" means the mass of the undercoat in an area of 1540.25 mm².

Controlling the areal density of the undercoat to be 0.5 mg/1540.25 mm² to 50 mg/1540.25 mm² is conducive to uniform distribution of the nucleation sites and promotes uniform deposition of the metal ions without affecting the transport of electrons. Controlling the areal density of the undercoat to be 1 mg/1540.25 mm² to 25 mg/1540.25 mm² achieves a better trade-off between the uniform distribution of the nucleation sites and the fast transport of electrons.

In some embodiments, the undercoat further includes a binder. A mass ratio between the carbon nanomaterial and the binder in the undercoat is 1: (0.1 to 2), and optionally 1: (0.1 to 1). In some embodiments, the mass ratio between the carbon nanomaterial and the binder in the undercoat is optionally 1: 0.1, 1: 0.4, 1: 0.5, 1: 0.6, 1: 0.7, 1: 1, 1: 1.2, 1: 1.5, 1: 1.8, or 1: 2.

Controlling the mass ratio between the carbon nanomaterial and the binder in the undercoat to be in an appropriate range is conducive to the uniform dispersion of the carbon nanomaterial and the uniform distribution of the nucleation sites of the undercoat, induces the uniform deposition of the metal ions, and improves the cycle performance.

In some embodiments, the current collector includes at least one of metal foil, a metal foam current collector, a metal mesh current collector, a carbon felt current collector, a carbon cloth current collector, a carbon paper current collector, or a composite current collector.

In some embodiments, the metal foil is optionally copper foil, aluminum foil, stainless steel foil, iron foil, zinc foil, or titanium foil; and the metal foam current collector is optionally copper foam, aluminum foam, zinc foam, or the like. The metal mesh current collector is optionally a copper mesh or an aluminum mesh. The composite current collector includes a polymer base film and metal foil formed on both sides of the polymer base film. The composite current collector may be a "sandwich" structure, with the polymer base film located in the middle, and the metal foil located on both sides. The polymer base film is optionally one of polyamide, polyterephthalate, polyimide, polyethylene, polypropylene, polystyrene, polyvinyl chloride, poly(acrylonitrile-co-butadiene-co-styrene), polybutanediol terephthalate, poly-p-phenylene terephthamide, polyphenylene ether, polyoxymethylene, epoxy resin, phenol-formaldehyde resin, polytetrafluoroethylene, polyvinylidene difluoride, silicone rubber, or polycarbonate.

The above current collectors are of high tensile strength and ductility, and are conducive to the stability and safety of the battery.

### [Positive electrode plate]

The positive electrode plate includes a positive current collector and a positive active material layer formed on at least a part of surfaces of the positive current collector. The positive active material layer includes a positive active material. The positive active material may include at least one of a layered transition metal oxide, a polyanionic compound, or a Prussian blue compound.

The transition metal in the layered transition metal oxide may be at least one of Mn, Fe, Ni, Co, Cr, Cu, Ti, Zn, V, Zr, or Ce. Optionally, the layered transition metal oxide is, for example, NaₓMO₂, where M is one or more of Ti, V, Mn, Co, Ni, Fe, Cr, or Cu, and 0 < x ≤ 1.

The polyanionic compound may be a type of compound containing a metal ion, a transition metal ion, and a tetrahedral (YO₄)ⁿ⁻ anion unit. The metal ion is optionally one of a sodium ion, a lithium ion, a potassium ion, or a zinc ion. The transition metal is optionally at least one of Mn, Fe, Ni, Co, Cr, Cu, Ti, Zn, V, Zr, or Ce. Y is optionally at least one of P, S, or Si; and n denotes a valence of (YO₄)ⁿ⁻.

The Prussian blue compound may be a compound containing a sodium ion, a transition metal ion, or a cyano ion (CN⁻). The transition metal may be at least one of Mn, Fe, Ni, Co, Cr, Cu, Ti, Zn, V, Zr, or Ce. The Prussian blue compound may be, for example, NaₐMe_{b}Me'_{c}(CN)₆, where Me and Me' each are independently at least one of Ni, Cu, Fe, Mn, Co, or Zn, 0 < a ≤ 2, 0 < b < 1, and 0 < c < 1.

The positive active material layer may further include a conductive agent to improve the conductivity of the positive electrode. The conductive agent is optionally one or more of Super P, acetylene black, carbon black, Ketjen black, carbon dots, carbon nanotubes, graphite, graphene, or carbon nanofibers.

The positive active material layer may include a binder to firmly bind the positive active material and optionally the conductive agent onto the positive current collector. The binder is optionally at least one of polyvinylidene difluoride (PVDF), polytetrafluoroethylene (PTFE), polyacrylic acid (PAA), polyvinyl alcohol (PVA), poly(ethylene-co-vinyl acetate) (EVA), styrene-butadiene rubber (SBR), carboxymethylcellulose (CMC), sodium alginate (SA), polymethacrylic acid (PMA), or carboxymethyl chitosan (CMCS).

The positive current collector may be a conductive carbon sheet, metal foil, carbon-coated metal foil, a porous metal sheet, or a composite current collector. The conductive carbon material of the conductive carbon sheet is optionally one or more of Super P, carbon black, Ketjen black, carbon dots, carbon nanotubes, graphite, graphene, or carbon nanofibers. The metal materials of the metal foil, the carbon-coated metal foil, and the porous metal sheet each are at least one independently selected from copper, aluminum, nickel, or stainless steel. The composite current collector may be a composite current collector formed by compounding metal foil and a polymer base film.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be at least one selected from sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, or sodium chloride.

In some embodiments, the solvent may be at least one selected from ethylene carbonate, propylene carbonate, diethyl carbonate, dimethyl carbonate, ethyl methyl carbonate, propylene carbonate, methyl acetate, ethyl propionate, fluoroethylene carbonate, ethyl ether, diglyme, triethylene glycol dimethyl ether, tetraethylene glycol dimethyl ether, or methyl tert-butyl ether.

In some embodiments, the electrolyte solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the material of the separator may be at least one selected from polyethylene, polypropylene, polyvinylidene fluoride, aramid fiber, polyethylene terephthalate, polytetrafluoroethylene, polyacrylonitrile, polyimide, polyamide, polyester, or natural fiber. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

### [Secondary battery]

The secondary battery includes a negative electrode plate. The negative electrode plate includes the current collector disclosed in some embodiments described above.

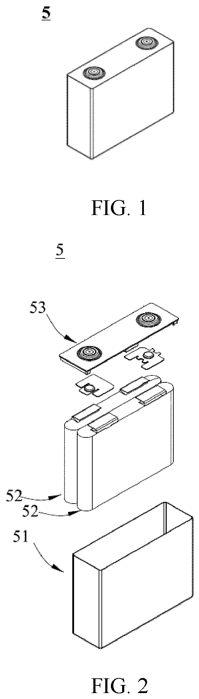

The shape of the secondary battery is not particularly limited in this application, and may be cylindrical, prismatic or any other shape. FIG. 2 shows a prismatic secondary battery 5 as an example. In some embodiments, the secondary batteries include at least one of a lithium battery, a sodium battery, a magnesium battery, a potassium battery, or a zinc battery.

In some embodiments, the secondary battery further includes a positive electrode plate, a separator, and an electrolyte solution.

In some embodiments, the secondary battery is an anode-free sodium battery.

The anode-free sodium battery contains no negative active material, but contains just a negative current collector. During the initial charge, sodium ions gain electrons on a cathode side, and are deposited as metallic sodium on the surface of the current collector to form a sodium metal phase. During discharge, the metallic sodium can be converted into sodium ions and return to the positive electrode, thereby implementing charge-and-discharge cycles. Compared with a sodium-ion secondary battery and a sodium metal battery, the anode-free sodium battery can achieve a higher energy density due to no limitation by the negative electrode material.

In some embodiments, the nucleation overpotential of the sodium ions deposited on the current collector is 10 mV to 26 mV. In some embodiments, the nucleation overpotential of the sodium ions deposited on the current collector is optionally 10 mV, 12 mV, 14 mV, 15 mV, 16 mV, 18 mV, 20 mV, 22 mV, 24 mV, 25 mV, or 26 mV.

The nucleation overpotential of the sodium ions deposited on the current collector may be tested by any means known in the art. As an example, the battery is charged to 100 µA at 25 °C at a constant current of 0.1 C. The most negative potential obtained in the process is recorded as an overpotential.

Controlling the nucleation overpotential of the sodium ions deposited on the current collector to be 10 mV to 26 mV is conducive to uniform deposition of the sodium ions on the current collector and suppresses the growth of sodium dendrites.

In some embodiments, the direct-current resistance of the secondary battery that has been cycled for 100 cycles is 3 Ω to 6 Ω. In some embodiments, the direct-current resistance of the secondary battery that has been cycled for 100 cycles is optionally 3 Ω, 3.2 Ω, 3.5 Ω, 3.8 Ω, 4 Ω, 4.3 Ω, 4.5 Ω, 4.7 Ω, 5 Ω, 5.3 Ω, 5.5 Ω, 5.8 Ω, or 6 Ω.

The direct-current resistance of the secondary battery may be tested by any means known in the art. An exemplary test method includes: charging a prepared battery at 25 °C at a constant current of 1 C until the voltage reaches 3.7 V, and then charging the battery at a constant voltage of 3.7 V until the current drops to 0.05 C, and recording the voltage V₁; and discharging the battery at a constant current of 1 C until the voltage reaches 2.5 V, recording the voltage V₂, and then calculating (V₂-V₁)/⅓C to obtain the internal resistance DCR₁ of the battery at the end of the first cycle; subsequently, leaving the battery to stand for 5 minutes (stabilization time), repeating the above steps for the same battery, and recording the internal resistance DCRₙ of the battery at the end of the n^{th} cycle (n = 1, 2, 3,..., 100); and plotting a curve of the discharge DCR versus the number of cycles of the battery by using the 100 DCR values including DCR₁, DCR₂, DCR₃,..., DCR₁₀₀ as ordinates and using the corresponding number of cycles as abscissas.

The direct-current resistance of the secondary battery that has been cycled for 100 cycles is 3 Ω to 6 Ω, indicating good electron transport efficiency of the secondary battery, and facilitating exertion of the battery performance.

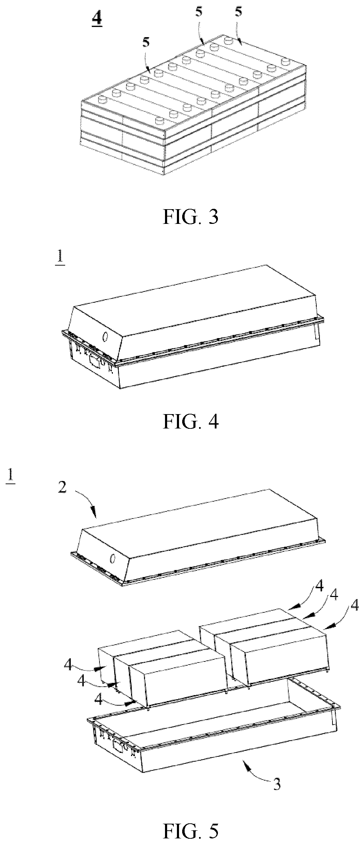

In some embodiments, referring to FIG. 3, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

### [Battery module]

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 4 shows a battery module 4 as an example. Referring to FIG. 4, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

### [Battery pack]

In some embodiments, the battery module may be assembled to form a battery pack. The battery pack may include one or more battery modules, and the specific number of battery modules in a battery pack may be selected by a person skilled in the art depending on practical applications and capacity of the battery pack.

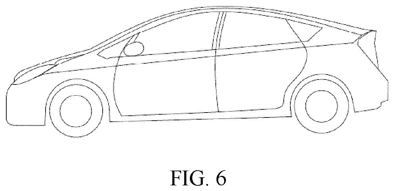

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

### [Electrical device]

According to an embodiment of this application, an electrical device is provided. The electrical device includes at least one of the secondary battery disclosed in any embodiment described above, the battery module disclosed in any embodiment described above, or the battery pack disclosed in any embodiment described above.

The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 7 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### I. Preparation methods

### Embodiment 1

### 1) Preparing a current collector

Adding a carbon material (the carbon material is single-walled carbon nanotubes plus Ketjen black, the mass ratio between the single-walled carbon nanotubes and the Ketjen black is 2: 8, and the single-walled carbon nanotubes are 30 µm in length and 20 nm in diameter, with a length-to-diameter ratio 1500; and the median diameter of the Ketjen black is 30 nm) and a sodium alginate binder at a mass ratio of 1: 0.4 into deionized water, stirring and mixing well to obtain a carbon material slurry; subsequently, applying the carbon material slurry onto the surface of copper foil, drying the slurry to form an undercoat that is 2 µm in thickness, and finally, performing cold-pressing and slitting to obtain a current collector.

### 2) Preparing a positive electrode plate

Mixing a Na₄Fe₃(PO₄)₂P₂O₇ (NFPP) material, carbon black as a conductive agent, and polyvinylidene fluoride as a binder in an N-methyl-pyrrolidone (NMP) solvent at a mass ratio of 8: 1: 1, and stirring well to obtain a positive electrode slurry. Subsequently, coating a surface of a positive current collector aluminum foil with the positive electrode slurry, and performing drying, cold-pressing, and slitting to obtain a positive electrode plate.

### 3) Separator

Using a polypropylene film as a separator.

### 4) Preparing an electrolyte solution

Dissolving a sodium salt sodium hexafluorophosphate (NaPF₆) in an organic solvent ethylene glycol dimethyl ether (DME) in an argon atmosphere glovebox (H₂O < 0.1 ppm, O₂ < 0.1 ppm), and stirring well to obtain an electrolyte solution in which the sodium salt concentration is 1 mol/L in Embodiment 1.

### 5) Preparing a battery

Stacking the positive electrode plate, the separator, and the current collector sequentially in such a way that the separator is located between the positive current collector and the negative current collector to serve a function of separation, and then winding the stacked structure to obtain a bare cell. Welding tabs onto the bare cell, and putting the bare cell into an aluminum shell. Dehydrating the cell by drying the cell at 80 °C, and then injecting an electrolyte solution into the aluminum shell package and sealing the package to obtain an uncharged battery. Performing steps such as static standing, hot- and cold-pressing, chemical formation, shaping, and capacity test on the uncharged battery to obtain an anode-free sodium metal battery product in Embodiment 1.

### Embodiments 2 to 6

The batteries in Embodiments 2 to 6 are prepared by a method similar to the battery preparation method in Embodiment 1 except that the length and diameter of the single-walled carbon nanotubes are adjusted. The detailed parameters are set out in Table 1.

### Embodiments 7 to 10

The batteries in Embodiments 7 to 10 are prepared by a method similar to the battery preparation method in Embodiment 1 except that the median diameter D_{V50} of Ketjen black is adjusted. The detailed parameters are set out in Table 1.

### Embodiments 11 to 14

The batteries in Embodiments 11 to 14 are prepared by a method similar to the battery preparation method in Embodiment 1 except that the mass ratio between the single-walled carbon nanotubes and the Ketjen black is adjusted. The detailed parameters are set out in Table 1.

### Embodiments 15 to 18

The batteries in Embodiments 15 to 18 are prepared by a method similar to the battery preparation method in Embodiment 1 except that the ratio of the mass sum of the single-walled carbon nanotubes and the Ketjen black to the mass of the sodium alginate binder is adjusted. The detailed parameters are set out in Table 1.

### Embodiments 19 to 22

The batteries in Embodiments 19 to 22 are prepared by a method similar to the battery preparation method in Embodiment 1 except that the thickness of the undercoat is adjusted. The detailed parameters are set out in Table 1.

### Embodiments 23 to 29

The batteries in Embodiments 23 to 29 are prepared by a method similar to the battery preparation method in Embodiment 1 except that the components of the carbon material are adjusted. The detailed parameters are set out in Table 1.

### Embodiment 30

The battery in Embodiment 30 is prepared by a method similar to the battery preparation method in Embodiment 1 except that the carbon material is adjusted to a combination of graphene plus carbon nanofibers plus Ketjen black and the mass ratio between the graphene, the single-walled carbon nanotubes, and Ketjen black is adjusted to 3: 2: 8. The detailed parameters are set out in Table 1.

### Embodiment 31

The battery in Embodiment 31 is prepared by a method similar to the battery preparation method in Embodiment 30 except that the carbon material is adjusted to a combination of graphene plus single-walled carbon nanotubes plus Ketjen black. The detailed parameters are set out in Table 1.

### Embodiments 32 to 34

The batteries in Embodiments 32 to 34 are prepared by a method similar to the battery preparation method in Embodiment 31 except that the mass ratio between the graphene, the single-walled carbon nanotubes, and the Ketjen black is adjusted. The detailed parameters are set out in Table 1.

### Embodiments 35 to 38

The batteries in Embodiments 35 to 38 are prepared by a method similar to the battery preparation method in Embodiment 34 except that the median diameter D_{V50} of graphene is adjusted. The detailed parameters are set out in Table 1.

### Embodiments 39 to 42

The batteries in Embodiments 39 to 42 are prepared by a method similar to the battery preparation method in Embodiment 34 except that the thickness of the undercoat is adjusted. The detailed parameters are set out in Table 1.

### Embodiment 43

The battery in Embodiment 43 is prepared by a method similar to the battery preparation method in Embodiment 34 except that the solvent of the electrolyte solution is adjusted to ethylene carbonate. The detailed parameters are set out in Table 1.

### Comparative Embodiment 1

The battery in Comparative Embodiment 1 is prepared by a method similar to the battery preparation method in Embodiment 1 except that the carbon material is adjusted to Ketjen black alone. The detailed parameters are set out in Table 1.

### Comparative Embodiments 2 to 4

The batteries in Comparative Embodiments 2 to 4 are prepared by a method similar to the battery preparation method in Comparative Embodiment 1 except that the carbon materials in the three comparative embodiments are adjusted to single-walled carbon nanotubes alone, Super P alone, and graphene alone, respectively. The detailed parameters are set out in Table 1.

### Comparative Embodiment 5

The battery in Comparative Embodiment 5 is prepared by a method similar to the battery preparation method in Comparative Embodiment 1 except that the solvent of the electrolyte solution is adjusted to ethylene carbonate. The detailed parameters are set out in Table 1.

### Comparative Embodiment 6

The battery in Comparative Embodiment 6 is prepared by a method similar to the battery preparation method in Comparative Embodiment 1 except that the undercoat containing the carbon material is not prepared on the current collector copper foil. The detailed parameters are set out in Table 1.

(The single-walled carbon nanotubes, multi-walled carbon nanotubes, few-walled carbon nanotubes, carbon nanofibers, Ketjen black, Super P, fullerene, and graphene are all commercially available)

### II. Performance test

### 1. Measuring the particle size of the carbon material

### 1) Determining the median diameter D_{V50} of the zero-dimensional carbon material

Measuring out 0.1 g to 0.13 g of a zero-dimensional carbon material sample under test by use of a 50 mL beaker with reference to the standard GB/T 19077-2016 *Particle Size Analysis-Laser Diffraction Methods,* adding 5 grams of anhydrous ethanol, and putting in a stir bar that is approximately 2.5 mm in diameter and then sealing the sample with a cling film. Ultrasonicating the sample for 5 minutes and then moving the sample to a magnetic stirrer, stirring the sample at 500 rpm for at least 20 minutes, and taking 2 samples from each batch of products for testing. Testing the median diameter by using a laser particle size analyzer such as a Mastersizer 2000E laser particle size analyzer manufactured by Malvern Instruments Ltd., UK.

### 2) Measuring the dimensions of the one-dimensional carbon material and the two-dimensional carbon material

Measuring out 0.1 g to 0.13 g of a one- or two-dimensional carbon material sample under test by use of a 50 mL beaker with reference to the standard GB/T 19077-*2016 Particle Size Analysis-Laser Diffraction Methods,* adding 5 grams of anhydrous ethanol, and putting in a stir bar that is approximately 2.5 mm in diameter and then sealing the sample with a cling film. Ultrasonicating the sample for 5 minutes and then moving the sample to a magnetic stirrer, stirring the sample at 500 rpm for at least 20 minutes, taking 2 samples from each batch of products, and dripping the samples onto a copper mesh for testing. Measuring the dimensions by using a Sigma 500 scanning electron microscope manufactured by Zeiss Germany.

### 2. Testing the performance of the undercoat

### 1) Testing the areal density

An exemplary process of determining the areal density is: taking a part in a specified area of an electrode plate as a sample at a normal temperature, and punching the electrode plate sample with a punching machine to make circular holes, each circular hole being 1540.25 mm² in area; weighing the mass of the sample by use of an electronic balance, denoted as m₁ (unit: mg); and then punching a blank current collector (blank foil) in the same way, and weighing the mass of the blank current collector by use of the electronic balance, denoted as m₂ (unit: mg); and finally, calculating the areal density (unit: mg/1540.25 mm²) as: areal density = (m₁ - m₂)/ 1540.25.

### 3. Testing the battery performance

### 1) Testing the overpotential

A process of testing the overpotential is: Charging the battery to 100 µA at 25 °C at a constant current of 0.1 C, during which the most negative potential obtained is recorded as an overpotential.

### 2) Testing the Coulombic efficiency

A process of testing the Coulombic efficiency is: Charging a prepared battery at 25 °C at a constant current of 1/3 C until the voltage reaches 3.7 V, and then charging the battery at a constant voltage of 3.7 V until the current drops to 0.05 C, so as to obtain an initial charge capacity (Cc₁); discharging the battery at a constant current of 1/3 C until the voltage reaches 2.5 V, so as to obtain an initial discharge capacity (Cd₁), and then calculating the Coulombic efficiency of the battery as:
Coulombic efficiency = initial discharge capacity (Cdi)/initial charge capacity (Cc1) × 100%.

### 3) Testing the cycle capacity retention rate of the battery

A process of testing the cycle capacity retention rate of the battery is: Charging the prepared battery at 25 °C at a constant current of 1 C until the voltage reaches 3.7 V, and then charging the battery at a constant voltage of 3.7 V until the current drops to 0.05 C; and then discharging the battery at a current of 3 C until the voltage reaches 2.5 V, and recording the capacity at this time as an initial capacity (C₀); repeating the foregoing steps for the same battery, and recording the discharge capacity (Cₙ) of the battery at the end of the n^{th} cycle, and calculating the capacity retention rate of the battery at the end of each cycle as: Pₙ = Cₙ/C₀ × 100%; and plotting a curve of the capacity retention rate versus the number of cycles of the battery by using 100 values including P1, P2,..., P100 as ordinates and using the corresponding number of cycles as abscissas. In this test process, the first cycle corresponds to n = 1, the second cycle corresponds to n = 2, and so on, and the 100^{th} cycle corresponds to n = 100. The battery capacity retention rate data corresponding to the embodiment or comparative embodiment in Table 2 is the measured data of the battery that has been cycled for 100 cycles under the above test conditions, that is, the value of P₁₀₀. The test process for the comparative embodiment and other embodiments is the same as above.

### 4) Measuring the direct-current resistance (DCR)

An exemplary test process of the direct-current resistance (DCR) includes: Charging a prepared battery at 25 °C at a constant current of 1 C until the voltage reaches 3.7 V, and then charging the battery at a constant voltage of 3.7 V until the current drops to 0.05 C, and recording the voltage V₁; and discharging the battery at a constant current of 1 C until the voltage reaches 2.5 V, recording the voltage V₂, and then calculating (V₂-V₁)/⅓C to obtain the internal resistance DCR₁ of the battery at the end of the first cycle; subsequently, leaving the battery to stand for 5 minutes (stabilization time), repeating the above steps for the same battery, and recording the internal resistance DCRₙ of the battery at the end of the n^{th} cycle (n = 1, 2, 3,..., 100); and plotting a curve of the discharge DCR versus the number of cycles of the battery by using the 100 DCR values including DCR₁, DCR₂, DCR₃,..., DCR₁₀₀ as ordinates and using the corresponding number of cycles as abscissas.

### 5) Testing the sodium dendrites

Disassembling the battery in an argon atmosphere glovebox (H₂O < 0.1 ppm, O₂ < 0.1 ppm) after the battery has been cycled for 100 cycles, and visually observing the surface morphology of the negative electrode plate to determine whether any sodium dendrites are generated. If the negative electrode plate is free from white spots, it is determined that none of sodium dendrites occurs; if the negative electrode plate contains sporadic white spots, it is determined that sodium dendrites are slight; if the negative electrode plate contains dense white spots, it is determined that sodium dendrites are severe. The test process for the comparative embodiment and other embodiments is the same as above.

### III. Analysis on the test results of embodiments and comparative embodiments

The batteries described in the embodiments and the comparative embodiments are prepared according to the foregoing methods respectively, and performance parameters of the batteries are measured. The test results are shown in Table 1 and Table 2 below.

**Table 1 Preparation parameters of embodiments and comparative embodiments**

| Serial number | Undercoat | | | | | | | | | | Electr olyte solutio n |
|---|---|---|---|---|---|---|---|---|---|---|---|
| | Carbon nanomaterial | | | | | | | Mass ratio between carbon nanoma terial and binder | Thick ness of under coat (µm) | Areal density (mg/15 40.25 mm²) | Solven t |
| | Compo nents of carbon nanoma terial | Lengt h of carbo n nanot ube (µm) | Diam eter of carbo n nanot ube (nm) | Lengt h-to-diam eter ratio of carbo n nanot ube (10³) | Media n diamet er D_{V50} of condu ctive carbon black (nm) | Medi an diam eter D_{V50} of graph ene (nm) | Mass ratio betwee n graphe ne, carbon nanotu bes, and condu ctive carbon black | | | | |
| Embodi ment 1 | Single-walled carbon nanotub es + Ketjen black | 30 | 20 | 1.5 | 30 | / | 0: 2: 8 | 1: 0.4 | 2.00 | 2.32 | Ethyle ne glycol dimeth yl ether |
| Embodi ment 2 | Single-walled carbon nanotub es + Ketjen black | 10 | 20 | 0.5 | 30 | / | 0: 2: 8 | 1: 0.4 | 2.00 | 2.28 | Ethyle ne glycol dimeth yl ether |
| Embodi ment 3 | Single-walled carbon nanotub es + Ketjen black | 20 | 20 | 1 | 30 | / | 0: 2: 8 | 1: 0.4 | 2.00 | 2.30 | Ethyle ne glycol dimeth yl ether |
| Embodi ment 4 | Single-walled carbon nanotub es + Ketjen black | 50 | 20 | 2.5 | 30 | / | 0: 2: 8 | 1: 0.4 | 2.00 | 2.33 | Ethyle ne glycol dimeth yl ether |
| Embodi ment 5 | Single-walled carbon nanotub es + Ketjen black | 50 | 5 | 10 | 30 | / | 0: 2: 8 | 1: 0.4 | 2.00 | 2.27 | Ethyle ne glycol dimeth yl ether |
| Embodi ment 6 | Single-walled carbon nanotub es + Ketjen black | 50 | 1 | 50 | 30 | / | 0: 2: 8 | 1: 0.4 | 2.00 | 2.25 | Ethyle ne glycol dimeth yl ether |
| Embodi ment 7 | Single-walled carbon nanotub es + Ketjen black | 30 | 20 | 1.5 | 5 | / | 0: 2: 8 | 1: 0.4 | 2.00 | 2.24 | Ethyle ne glycol dimeth yl ether |
| Embodi ment 8 | Single-walled carbon nanotub es + Ketjen black | 30 | 20 | 1.5 | 10 | / | 0: 2: 8 | 1: 0.4 | 2.00 | 2.26 | Ethyle ne glycol dimeth yl ether |
| Embodi ment 9 | Single-walled carbon nanotub es + Ketjen black | 30 | 20 | 1.5 | 60 | / | 0: 2: 8 | 1: 0.4 | 2.00 | 2.34 | Ethyle ne glycol dimeth yl ether |
| Embodi ment 10 | Single-walled carbon nanotub es + Ketjen black | 30 | 20 | 1.5 | 80 | / | 0: 2: 8 | 1: 0.4 | 2.00 | 2.37 | Ethyle ne glycol dimeth yl ether |
| Embodi ment 11 | Single-walled carbon nanotub es + Ketjen black | 30 | 20 | 1.5 | 30 | / | 0: 0.5: 9.5 | 1: 0.4 | 2.00 | 2.43 | Ethyle ne glycol dimeth yl ether |
| Embodi ment 12 | Single-walled carbon nanotub es + Ketjen black | 30 | 20 | 1.5 | 30 | / | 0: 5: 5 | 1: 0.4 | 2.00 | 2.28 | Ethyle ne glycol dimeth yl ether |
| Embodi ment 13 | Single-walled carbon nanotub es + Ketjen black | 30 | 20 | 1.5 | 30 | / | 0: 7: 3 | 1: 0.4 | 2.00 | 2.22 | Ethyle ne glycol dimeth yl ether |
| Embodi ment 14 | Single-walled carbon nanotub es + Ketjen black | 30 | 20 | 1.5 | 30 | / | 0: 9: 1 | 1: 0.4 | 2.00 | 2.12 | Ethyle ne glycol dimeth yl ether |
| Embodi ment 15 | Single-walled carbon nanotub es + Ketjen black | 30 | 20 | 1.5 | 30 | / | 0: 2: 8 | 1: 0.1 | 2.00 | 2.38 | Ethyle ne glycol dimeth yl ether |
| Embodi ment 16 | Single-walled carbon nanotub es + Ketjen black | 30 | 20 | 1.5 | 30 | / | 0: 2: 8 | 1: 0.6 | 2.00 | 2.27 | Ethyle ne glycol dimeth yl ether |
| Embodi ment 17 | Single-walled carbon nanotub es + Ketjen black | 30 | 20 | 1.5 | 30 | / | 0: 2: 8 | 1: 1 | 2.00 | 2.22 | Ethyle ne glycol dimeth yl ether |
| Embodi ment 18 | Single-walled carbon nanotub es + Ketjen black | 30 | 20 | 1.5 | 30 | / | 0: 2: 8 | 1: 2 | 2.00 | 2.16 | Ethyle ne glycol dimeth yl ether |
| Embodi ment 19 | Single-walled carbon nanotub es + Ketjen black | 30 | 20 | 1.5 | 30 | / | 0: 2: 8 | 1: 0.4 | 0.50 | 0.64 | Ethyle ne glycol dimeth yl ether |
| Embodi ment 20 | Single-walled carbon nanotub es + Ketjen black | 30 | 20 | 1.5 | 30 | / | 0: 2: 8 | 1: 0.4 | 1.00 | 1.12 | Ethyle ne glycol dimeth yl ether |
| Embodi ment 21 | Single-walled carbon nanotub es + Ketjen black | 30 | 20 | 1.5 | 30 | / | 0: 2: 8 | 1: 0.4 | 8.00 | 8.86 | Ethyle ne glycol dimeth yl ether |
| Embodi ment 22 | Single-walled carbon nanotub es + Ketjen black | 30 | 20 | 1.5 | 30 | / | 0: 2: 8 | 1: 0.4 | 15.00 | 20.25 | Ethyle ne glycol dimeth yl ether |
| Embodi ment 23 | Single-walled carbon nanotub es + Super P | 30 | 20 | 1.5 | 30 | / | 0: 2: 8 | 1: 0.4 | 2.00 | 2.36 | Ethyle ne glycol dimeth yl ether |
| Embodi ment 24 | Few-walled carbon nanotub es + Ketjen black | 30 | 20 | 1.5 | 30 | / | 0: 2: 8 | 1: 0.4 | 2.00 | 2.34 | Ethyle ne glycol dimeth yl ether |
| Embodi ment 25 | Multi-walled carbon nanotub es + Ketjen black | 30 | 20 | 1.5 | 30 | / | 0: 2: 8 | 1: 0.4 | 2.00 | 2.40 | Ethyle ne glycol dimeth yl ether |
| Embodi ment 26 | Single-walled carbon nanotub es + fulleren e | 30 | 20 | 1.5 | 30 | / | 0: 2: 8 | 1: 0.4 | 2.00 | 4.32 | Ethyle ne glycol dimeth yl ether |
| Embodi ment 27 | Carbon nanofib ers + Ketjen black | 30 | 20 | 1.5 | 30 | / | 0: 2: 8 | 1: 0.4 | 2.00 | 2.12 | Ethyle ne glycol dimeth yl ether |
| Embodi ment 28 | Graphe ne + single-walled carbon nanotub es | 30 | 20 | 1.5 | / | 200 | 8: 2: 0 | 1: 0.4 | 2.00 | 4.65 | Ethyle ne glycol dimeth yl ether |
| Embodi ment 29 | Graphe ne + Ketjen black | / | / | / | 30 | 200 | 8: 0: 2 | 1: 0.4 | 2.00 | 5.06 | Ethyle ne glycol dimeth yl ether |
| Embodi ment 30 | Graphe ne + carbon nanofib ers + Ketjen black | 30 | 20 | 1.5 | 30 | 200 | 3: 2: 8 | 1: 0.4 | 2.00 | 2.55 | Ethyle ne glycol dimeth yl ether |
| Embodi ment 31 | Graphe ne + single-walled carbon nanotub es + Ketjen black | 30 | 20 | 1.5 | 30 | 200 | 3: 2: 8 | 1: 0.4 | 2.00 | 2.66 | Ethyle ne glycol dimeth yl ether |
| Embodi ment 32 | Graphe ne + single-walled carbon nanotub es + Ketjen black | 30 | 20 | 1.5 | 30 | 200 | 1: 2: 8 | 1: 0.4 | 2.00 | 2.60 | Ethyle ne glycol dimeth yl ether |
| Embodi ment 33 | Graphe ne + single-walled carbon nanotub es + Ketjen black | 30 | 20 | 1.5 | 30 | 200 | 5: 2: 8 | 1: 0.4 | 2.00 | 2.72 | Ethyle ne glycol dimeth yl ether |
| Embodi ment 34 | Graphe ne + single-walled carbon nanotub es + Ketjen black | 30 | 20 | 1.5 | 30 | 200 | 10: 2: 8 | 1: 0.4 | 2.00 | 2.88 | Ethyle ne glycol dimeth yl ether |
| Embodi ment 35 | Graphe ne + single-walled carbon nanotub es + Ketjen black | 30 | 20 | 1.5 | 30 | 50 | 3: 2: 8 | 1: 0.4 | 2.00 | 2.58 | Ethyle ne glycol dimeth yl ether |
| Embodi ment 36 | Graphe ne + single-walled carbon nanotub es + Ketjen black | 30 | 20 | 1.5 | 30 | 100 | 3: 2: 8 | 1: 0.4 | 2.00 | 2.62 | Ethyle ne glycol dimeth yl ether |
| Embodi ment 37 | Graphe ne + single-walled carbon nanotub es + Ketjen black | 30 | 20 | 1.5 | 30 | 300 | 3: 2: 8 | 1: 0.4 | 2.00 | 2.70 | Ethyle ne glycol dimeth yl ether |
| Embodi ment 38 | Graphe ne + single-walled carbon nanotub es + Ketjen black | 30 | 20 | 1.5 | 30 | 500 | 3: 2: 8 | 1: 0.4 | 2.00 | 2.76 | Ethyle ne glycol dimeth yl ether |
| Embodi ment 39 | Graphe ne + single-walled carbon nanotub es + Ketjen black | 30 | 20 | 1.5 | 30 | 200 | 3: 2: 8 | 1: 0.4 | 0.50 | 0.88 | Ethyle ne glycol dimeth yl ether |
| Embodi ment 40 | Graphe ne + single-walled carbon nanotub es + Ketjen black | 30 | 20 | 1.5 | 30 | 200 | 3: 2: 8 | 1: 0.4 | 1.00 | 1.36 | Ethyle ne glycol dimeth yl ether |
| Embodi ment 41 | Graphe ne + single-walled carbon nanotub es + Ketjen black | 30 | 20 | 1.5 | 30 | 200 | 3: 2: 8 | 1: 0.4 | 8.00 | 9.56 | Ethyle ne glycol dimeth yl ether |
| Embodi ment 42 | Graphe ne + single-walled carbon nanotub es + Ketjen black | 30 | 20 | 1.5 | 30 | 200 | 3: 2: 8 | 1: 0.4 | 15.00 | 23.55 | Ethyle ne glycol dimeth yl ether |
| Embodi ment 43 | Single-walled carbon nanotub es + Ketjen black | 30 | 20 | 1.5 | 30 | / | 0: 2: 8 | 1: 0.4 | 2.00 | 2.32 | Ethyle ne carbon ate |
| Compar ative Embodi ment 1 | Ketjen black | / | / | / | 30 | / | / | 1: 0.4 | 2.00 | 3.12 | Ethyle ne glycol dimeth yl ether |
| Compar ative Embodi ment 2 | Single-walled carbon nanotub es | 30 | 20 | 1.5 | / | / | / | 1: 0.4 | 2.00 | 2.22 | Ethyle ne glycol dimeth yl ether |
| Compar ative Embodi ment 3 | Super P | / | / | / | 30 | / | / | 1: 0.4 | 2.00 | 3.45 | Ethyle ne glycol dimeth yl ether |
| Compar ative Embodi ment 4 | Graphe ne | / | / | / | / | 200 | / | 1: 0.4 | 2.00 | 4.83 | Ethyle ne glycol dimeth yl ether |
| Compar ative Embodi ment 5 | Single-walled carbon nanotub es | 30 | 20 | 1.5 | / | / | / | 1: 0.4 | 2.00 | 2.22 | Ethyle ne carbon ate |
| Compar ative Embodi ment 6 | / | / | / | / | / | / | / | / | / | / | Ethyle ne glycol dimeth yl ether |

**Table 2 Parameters and performance test results of embodiments and comparative embodiments**

| Serial number | Battery | | | | |
|---|---|---|---|---|---|
| | Overpotential (mV) | Coulombic efficiency (%) | 100^{th}-cycle capacity retention rate (%) | 100^{th}-cycle direct-current resistance DCR (Ω) | Sodium dendrites |
| Embodiment 1 | 15 | 95.5 | 89.8 | 3.2 | None |
| Embodiment 2 | 15 | 95.1 | 89.5 | 3.4 | None |
| Embodiment 3 | 15 | 95.3 | 89.6 | 3.2 | None |
| Embodiment 4 | 15 | 95.4 | 89.7 | 3.3 | None |
| Embodiment 5 | 16 | 94.9 | 89.6 | 3.5 | None |
| Embodiment 6 | 16 | 94.7 | 89.0 | 3.6 | None |
| Embodiment 7 | 17 | 93.6 | 87.6 | 4.2 | None |
| Embodiment 8 | 16 | 94.3 | 88.8 | 3.8 | None |
| Embodiment 9 | 16 | 94.5 | 89.0 | 3.7 | None |
| Embodiment 10 | 17 | 93.9 | 87.8 | 4.1 | None |
| Embodiment 11 | 19 | 92.8 | 86.3 | 4.6 | None |
| Embodiment 12 | 16 | 94.6 | 88.9 | 3.6 | None |
| Embodiment 13 | 18 | 93.1 | 86.6 | 4.4 | None |
| Embodiment 14 | 19 | 92.6 | 86.0 | 4.7 | None |
| Embodiment 15 | 16 | 94.8 | 89.1 | 3.5 | None |
| Embodiment 16 | 17 | 94.5 | 88.6 | 3.6 | None |
| Embodiment 17 | 20 | 92.2 | 86.0 | 4.6 | None |
| Embodiment 18 | 21 | 91.8 | 85.6 | 4.8 | None |
| Embodiment 19 | 22 | 91.6 | 85.3 | 4.9 | None |
| Embodiment 20 | 18 | 93.3 | 86.9 | 4.3 | None |
| Embodiment 21 | 21 | 91.5 | 85.2 | 5.0 | None |
| Embodiment 22 | 23 | 91.1 | 84.9 | 5.1 | None |
| Embodiment 23 | 16 | 94.7 | 89.3 | 3.6 | None |
| Embodiment 24 | 16 | 94.6 | 89.1 | 3.6 | None |
| Embodiment 25 | 16 | 94.5 | 89.1 | 3.6 | None |
| Embodiment 26 | 18 | 93.3 | 86.8 | 4.0 | None |
| Embodiment 27 | 17 | 94.8 | 88.8 | 3.5 | None |
| Embodiment 28 | 19 | 92.9 | 86.4 | 4.3 | None |
| Embodiment 29 | 21 | 91.7 | 85.4 | 4.8 | None |
| Embodiment 30 | 17 | 93.5 | 87.4 | 4.2 | None |
| Embodiment 31 | 17 | 93.8 | 87.6 | 4.1 | None |
| Embodiment 32 | 16 | 94.6 | 89.2 | 3.6 | None |
| Embodiment 33 | 19 | 92.8 | 86.3 | 4.3 | None |
| Embodiment 34 | 20 | 92.3 | 86.2 | 4.6 | None |
| Embodiment 35 | 20 | 92.1 | 86.0 | 4.6 | None |
| Embodiment 36 | 18 | 93.1 | 86.4 | 4.1 | None |
| Embodiment 37 | 18 | 93.3 | 86.7 | 4.1 | None |
| Embodiment 38 | 20 | 92.5 | 86.6 | 4.5 | None |
| Embodiment 39 | 23 | 91.2 | 85.1 | 5 | None |
| Embodiment 40 | 19 | 93.4 | 86.8 | 4.3 | None |
| Embodiment 41 | 22 | 91.3 | 85.0 | 5.0 | None |
| Embodiment 42 | 24 | 90.8 | 84.5 | 5.2 | None |
| Embodiment 43 | 26 | 88.7 | 83.2 | 5.7 | None |
| Comparative Embodiment 1 | 28 | 87.6 | 81.7 | 6.6 | None |
| Comparative Embodiment 2 | 27 | 88.1 | 82.3 | 6.1 | None |
| Comparative Embodiment 3 | 29 | 87.1 | 81.3 | 7.3 | None |
| Comparative Embodiment 4 | 29 | 86.8 | 80.8 | 8.0 | Slight |
| Comparative Embodiment 5 | 30 | 85.5 | 78.9 | 8.3 | Slight |
| Comparative Embodiment 6 | 35 | 84.1 | 77.7 | 10.2 | Severe |

As can be seen from the above test results, the undercoat in Embodiments 1 to 43 includes a carbon nanomaterial. The carbon nanomaterial includes at least two of a zero-dimensional carbon material, a one-dimensional carbon material, or a two-dimensional carbon material. The zero-dimensional carbon material is one of Super P, Ketjen black, or fullerene. The one-dimensional carbon material is one of single-walled carbon nanotubes, multi-walled carbon nanotubes, or carbon nanofibers. The two-dimensional carbon material is graphene. As can be seen from Embodiments 1 to 43 versus Comparative Embodiment 6, an undercoat is formed on the surface of the current collector copper foil, thereby being conducive to uniform distribution of nucleation sites, reducing the nucleation overpotential of sodium ions, and suppressing the growth of sodium dendrites. In addition, the undercoat containing the carbon nanomaterial is also conducive to reducing the direct-current resistance of the battery that has been cycled for 100 cycles, improving the Coulombic efficiency of the battery, and improving the capacity retention rate of the battery that has been cycled for 100 cycles. As can be seen from Embodiments 1 to 43 versus Comparative Embodiments 1 to 5, compared to the undercoat containing only one of the zero-dimensional carbon material, the one-dimensional carbon material, or the two-dimensional carbon material, the undercoat containing two or three of the zero-dimensional carbon material, the one-dimensional carbon material, or the two-dimensional carbon material can more effectively reduce the nucleation overpotential of the metal ions, suppress the growth of sodium dendrites, reduce the direct-current resistance of the battery that has been cycled for 100 cycles, and improve the Coulombic efficiency of the battery and the capacity retention rate of the battery that has been cycled for 100 cycles.

As can be seen from Embodiments 1 to 6 versus Comparative Embodiments 1 to 6, controlling the length-to-diameter ratio of the single-walled carbon nanotubes to be 500 to 50000 can effectively reduce the nucleation overpotential of the sodium ions, suppress the growth of sodium dendrites, reduce the direct-current resistance of the battery that has been cycled for 100 cycles, and improve the Coulombic efficiency of the battery and the capacity retention rate of the battery that has been cycled for 100 cycles. As can be seen from Embodiment 1 and Embodiments 3 to 5 versus Embodiments 2 and 6, controlling the length-to-diameter ratio of the single-walled carbon nanotubes to be 1000 to 10000 can further improve the capacity retention rate of the battery that has been cycled for 100 cycles.

As can be seen from Embodiments 1 to 6 versus Comparative Embodiments 1 to 6, controlling the tube diameter of the single-walled carbon nanotubes to be 1 nm to 20 nm and controlling the length of the single-walled carbon nanotubes to be 10 µm to 50 µm can effectively reduce the nucleation overpotential of sodium ions, suppress the growth of sodium dendrites, reduce the direct-current resistance of the battery that has been cycled for 100 cycles, and improve the Coulombic efficiency of the battery and the capacity retention rate of the battery that has been cycled for 100 cycles. As can be seen from Embodiments 1 and 3 versus Embodiments 2 and 4, controlling the length of the single-walled carbon nanotubes to be 20 µm to 30 µm can further reduce the direct-current resistance of the battery that has been cycled for 100 cycles. As can be seen from Embodiments 4 to 5 versus Embodiment 6, controlling the diameter of the single-walled carbon nanotubes to be 5 nm to 20 nm can further reduce the nucleation overpotential of the sodium ions and the direct-current resistance of the battery that has been cycled for 100 cycles, and improve the Coulombic efficiency of the battery and the capacity retention rate of the battery that has been cycled for 100 cycles. As can be seen from Embodiments 1 and 3 versus Embodiment 2 and Embodiments 4 to 6, controlling the diameter of the single-walled carbon nanotubes to be 5 nm to 20 nm and controlling the length of the single-walled carbon nanotubes to be 20 µm to 30 µm can more effectively reduce the direct-current resistance of the sodium battery that has been cycled for 100 cycles.

As can be seen from Embodiment 1 and Embodiments 8 to 9 versus Embodiments 7 and 10, controlling the median diameter D_{V50} of the Ketjen black to be 10 nm to 60 nm can more effectively reduce the nucleation overpotential of the sodium ions and the direct-current resistance of the battery that has been cycled for 100 cycles, and improve the Coulombic efficiency of the battery and the capacity retention rate of the battery that has been cycled for 100 cycles.

As can be seen from Embodiment 1 and Embodiments 12 to 13 versus Embodiments 11 and 14, controlling the mass ratio between the single-walled carbon nanotubes and the Ketjen black to be (2: 8) to (7: 3) can more effectively reduce the nucleation overpotential of the sodium ions and the direct-current resistance of the battery that has been cycled for 100 cycles, and improve the Coulombic efficiency of the battery and the capacity retention rate of the battery that has been cycled for 100 cycles.

As can be seen from Embodiment 1 and Embodiments 15 to 18 versus Comparative Embodiments 1 to 6, controlling the mass ratio between the carbon nanomaterial and the binder to be 1: (0.1 to 2) can effectively reduce the nucleation overpotential of the sodium ions and the direct-current resistance of the battery that has been cycled for 100 cycles, and improve the Coulombic efficiency of the battery and the capacity retention rate of the battery that has been cycled for 100 cycles. As can be seen from Embodiment 1 and Embodiments 15 to 17 versus Embodiment 18, controlling the mass ratio between the carbon nanomaterial and the binder to be 1: (0.1 to 1) can further reduce the nucleation overpotential of the sodium ions and the direct-current resistance of the battery that has been cycled for 100 cycles, and improve the Coulombic efficiency of the battery and the capacity retention rate of the battery that has been cycled for 100 cycles.

As can be seen from Embodiments 19 to 22 versus Comparative Embodiments 1 to 6, as well as Embodiments 39 to 42 versus Comparative Embodiments 1 to 6, controlling the thickness of the undercoat made of the single-walled carbon nanotubes and the Ketjen black to be 0.5 µm to 15 µm can further reduce the nucleation overpotential of the sodium ions and the direct-current resistance of the battery that has been cycled for 100 cycles, and improve the Coulombic efficiency of the battery and the capacity retention rate of the battery that has been cycled for 100 cycles. As can be seen from Embodiment 1 and Embodiments 20 to 21 versus Embodiments 19 and 22, as well as Embodiment 31 and Embodiments 40 to 41 versus Embodiments 39 and 42, controlling the thickness of the undercoat made of the single-walled carbon nanotubes and the Ketjen black to be 1 µm to 8 µm can further reduce the nucleation overpotential of the sodium ions.

As can be seen from Embodiment 1 and Embodiments 23 to 31 versus Comparative Embodiments 1 to 6, the nucleation overpotential of sodium ions of the following undercoats is lower than the nucleation overpotential of the single-wall carbon nanotube undercoat, the Ketjen black undercoat, the Super P undercoat, and the graphene undercoat separately: an undercoat made of single-wall carbon nanotubes and Ketjen black; an undercoat made of single-wall carbon nanotubes and Super P; an undercoat made of few-walled carbon nanotubes and Ketjen black; an undercoat made of multi-walled carbon nanotubes and Ketjen black; an undercoat made of single-wall carbon nanotubes and fullerene; an undercoat made of carbon nanofibers and Ketjen black; an undercoat made of single-wall carbon nanotubes and graphene; an undercoat made of Ketjen black and graphene; an undercoat made of carbon nanofibers, Ketjen black, and graphene; and, an undercoat made of single-wall carbon nanotubes, Ketjen black, and graphene. This suppresses the growth of sodium dendrites, reduces the direct-current resistance of the battery that has been cycled for 100 cycles, and improves the Coulombic efficiency of the battery and the capacity retention rate of the battery that has been cycled for 100 cycles.

As can be seen from Embodiments 1 and 23 versus Embodiment 26, the nucleation overpotential of sodium ions of an undercoat made of single-walled carbon nanotubes and Ketjen black and the nucleation overpotential of sodium ions of an undercoat made of single-walled carbon nanotubes and Super P are lower than the nucleation overpotential of sodium ions of an undercoat made of single-wall carbon nanotubes and fullerene, thereby more effectively reducing the direct-current resistance of the battery that has been cycled for 100 cycles, and improving the Coulombic efficiency of the battery and the capacity retention rate of the battery that has been cycled for 100 cycles.

As can be seen from Embodiment 1 versus Embodiment 31, Embodiment 19 versus Embodiment 39, Embodiment 20 versus Embodiment 40, Embodiment 21 versus Embodiment 41, and Embodiment 22 versus Embodiment 42, compared to the undercoat made of single-walled carbon nanotubes, Ketjen black, and graphene, the undercoat made of single-walled carbon nanotubes and Ketjen black achieves a lower areal density, a lower nucleation overpotential, and a higher capacity retention rate of the battery that has been cycled for 100 cycles.

As can be seen from Embodiment 1 and Embodiments 23 to 27 versus Embodiments 28 to 29, compared to the undercoat made of graphene and single-walled carbon nanotubes and an undercoat made of graphene and Ketjen black, the following undercoats achieve a lower areal density, a lower nucleation overpotential of sodium ions, a lower direct-current resistance of the battery that has been cycled for 100 cycles, a higher Coulombic efficiency, and a higher capacity retention rate of the battery that has been cycled for 100 cycles: an undercoat made of single-walled carbon nanotubes and Ketjen black; an undercoat made of single-wall carbon nanotubes and Super P; an undercoat made of few-walled carbon nanotubes and Ketjen black; an undercoat made of multi-walled carbon nanotubes and Ketjen black; an undercoat made of single-wall carbon nanotubes and fullerene; and an undercoat made of carbon nanofibers and Ketjen black.

As can be seen from Embodiment 1 and Embodiments 11 to 14, 28 to 29, and 31 to 34 versus Comparative Embodiments 1 to 6, controlling the mass ratio between the graphene, the single-walled carbon nanotubes, and Ketjen black to be (0 to 10): (0 to 9): (0 to 9.5) can effectively reduce the nucleation overpotential of the sodium ions, suppress the growth of sodium dendrites, reduce the direct-current resistance of the battery that has been cycled for 100 cycles, and improve the Coulombic efficiency of the battery and the capacity retention rate of the battery that has been cycled for 100 cycles.

As can be seen from Embodiment 1 and Embodiments 35 to 38 versus Comparative Embodiments 1 to 6, controlling the median diameter D_{V50} of the graphene to be not greater than 500 nm can effectively reduce the nucleation overpotential of the sodium ions, suppress the growth of sodium dendrites, reduce the direct-current resistance of the battery that has been cycled for 100 cycles, and improve the Coulombic efficiency of the battery and the capacity retention rate of the battery that has been cycled for 100 cycles.

As can be seen from Embodiment 1 versus Embodiment 43, compared to the ethylene carbonate used as a solvent of the electrolyte solution, the ethylene glycol dimethyl ether used as a solvent of the electrolyte solution can effectively reduce the nucleation overpotential of the sodium ions and the direct-current resistance of the battery that has been cycled for 100 cycles, and improve the Coulombic efficiency of the battery and the capacity retention rate of the battery that has been cycled for 100 cycles.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A current collector with an undercoat formed on a surface, **characterized in that** the undercoat comprises a carbon nanomaterial, the carbon nanomaterial comprises at least two selected from a zero-dimensional carbon material, a one-dimensional carbon material, or a two-dimensional carbon material.

2. The current collector according to claim 1, **characterized in that** the carbon nanomaterial in the undercoat comprises the zero-dimensional carbon material and the one-dimensional carbon material.

3. The current collector according to claim 1 or 2, **characterized in that** a median diameter D_{V50} of the zero-dimensional carbon material is 10 nm to 60 nm.

4. The current collector according to any one of claims 1 to 3, **characterized in that** a length-to-diameter ratio of the one-dimensional carbon material is 500 to 50000, and optionally 1000 to 10000.

5. The current collector according to any one of claims 1 to 4, **characterized in that** a tube diameter of the one-dimensional carbon material is 1 nm to 20 nm, and optionally 5 nm to 20 nm, and a length of the one-dimensional carbon material is 10 µm to 50 µm, and optionally 20 µm to 30 µm.

6. The current collector according to any one of claims 1 to 5, **characterized in that** a median diameter D_{V50} of the two-dimensional carbon material is not greater than 500 nm.

7. The current collector according to any one of claims 1 to 6, **characterized in that** a mass ratio between the two-dimensional carbon material, the one-dimensional carbon material, and the zero-dimensional carbon material is (0 to 10): (0 to 9): (0 to 9.5), wherein at least two of a mass of the two-dimensional carbon material, a mass of the one-dimensional carbon material, or a mass of the zero-dimensional carbon material are not zero concurrently.

8. The current collector according to any one of claims 1 to 7, **characterized in that** a mass ratio between the one-dimensional carbon material and the zero-dimensional carbon material is (2: 8) to (7: 3).

9. The current collector according to any one of claims 1 to 8, **characterized in that** the zero-dimensional carbon material comprises at least one selected from conductive carbon black, carbon nanodots, or fullerene; and the conductive carbon black comprises at least one selected from Super P, Ketjen black, or acetylene black.

10. The current collector according to any one of claims 1 to 9, **characterized in that** the one-dimensional carbon material comprises at least one selected from carbon nanotubes, carbon nanohorns, carbon nanofibers, or carbon nanorods; and the carbon nanotubes comprise at least one selected from a single-walled carbon nanotube or a multi-walled carbon nanotube.

11. The current collector according to any one of claims 1 to 10, **characterized in that** the two-dimensional carbon material comprises at least one selected from graphene or graphyne.

12. The current collector according to any one of claims 1 to 11, **characterized in that** the one-dimensional carbon material in the undercoat is a single-walled carbon nanotube, and the zero-dimensional carbon material in the undercoat is a conductive carbon black.

13. The current collector according to any one of claims 1 to 12, **characterized in that** a thickness of the undercoat is 0.5 µm to 15 µm, and optionally 1 µm to 8 µm.

14. The current collector according to any one of claims 1 to 13, **characterized in that** an areal density of the undercoat is 0.5 mg/1540.25 mm² to 50 mg/1540.25 mm², and optionally 1 mg/1540.25 mm² to 25 mg/1540.25 mm².

15. The current collector according to any one of claims 1 to 14, **characterized in that** the undercoat further comprises a binder, and a mass ratio between the carbon nanomaterial and the binder in the undercoat is 1: (0.1 to 2), and optionally 1: (0.1 to 1).

16. The current collector according to any one of claims 1 to 15, **characterized in that** the current collector comprises at least one of metal foil, a metal foam current collector, a metal mesh current collector, a carbon felt current collector, a carbon cloth current collector, a carbon paper current collector, or a composite current collector.

17. An application of the current collector according to any one of claims 1 to 16 in a sodium battery.

18. A secondary battery, **characterized in that** the secondary battery comprises a negative electrode plate, and the negative electrode plate comprises the current collector according to any one of claims 1 to 16.

19. The secondary battery according to claim 18, **characterized in that** the secondary battery comprises at least one of a lithium battery, a sodium battery, a magnesium battery, a potassium battery, or a zinc battery.

20. The secondary battery according to claim 18 or 19, **characterized in that** the secondary battery is an anode-free sodium battery.

21. A battery module, **characterized in that** the battery module comprises the secondary battery according to any one of claims 18 to 20.

22. A battery pack, **characterized in that** the battery pack comprises the secondary battery according to any one of claims 18 to 20 or the battery module according to claim 21.

23. An electrical device, **characterized in that** the electrical device comprises at least one of the secondary battery according to any one of claims 18 to 20, the battery module according to claim 21, or the battery pack according to claim 22.
